## Europäisches Patentamt

## European Patent Office

## Office européen des brevets

(19)

(11) Veröffentlichungsnummer: **0 053 649**
**B1**

(12) **EUROPÄISCHE PATENTSCHRIFT**

(45) Veröffentlichungstag der Patentschrift:
08.05.85

(51) Int. Cl.⁴: **B 25 H 5/00**

(21) Anmeldenummer: **81103765.4**

(22) Anmeldetag: **16.05.81**

(54) **Fahrbarer Behälter.**

(30) Priorität: **05.12.80 DE 3045905**

(43) Veröffentlichungstag der Anmeldung:
**16.06.82 Patentblatt 82/24**

(45) Bekanntmachung des Hinweises auf die Patenterteilung:
**08.05.85 Patentblatt 85/19**

(84) Benannte Vertragsstaaten:
**DE NL SE**

(56) Entgegenhaltungen:
**CH - A - 322 378**
**DE - U - 1 942 100**
**DE - U - 7 807 246**

(73) Patentinhaber: **Hazet-Werk Hermann Zerver GmbH & Co. KG, Güldenwerther Bahnhofstrasse, D-5630 Remscheid 1 (DE)**

(72) Erfinder: **Zerver, Alfred, Fasanenweg 19, D-5630 Remscheid (DE)**

(74) Vertreter: **Stenger, Alex, Dipl.-Ing. et al, Patentanwälte Dipl.-Ing. A. Stenger Dipl.-Ing. W. Watzke Dipl.-Ing. H.J. Ring Kaiser-Friedrich-Ring 70, D-4000 Düsseldorf 11 (DE)**

Anmerkung. Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft einen fahrbaren Behälter, insbesondere zur Aufbewahrung von Werkzeugen und Werkstücken, vorzugsweise in Kraftfahrzeugwerkstätten, mit einem mit Rädern versehenen Behälterunterteil, an dem mindestens zwei Führungssäulen zur Lagerung einer Deckplatte angeordnet sind, die in ihrer obersten Stellung mittels einer Verriegelungsvorrichtung festlegbar ist und die über biegsame Zugelemente, vorzugsweise Ketten oder Seile mit einem Zwischenboden derart verbunden ist, daß dieser bei in der obersten Stellung festgelegter Deckplatte von dem Behälterunterteil abgehoben ist, sowie mit einem weiteren Zwischenboden.

Fahrbare Behälter der voranstehend beschriebenen Art sind aus der CH-A-322 378 (Fig. 4 und 5) bekannt. Auch für den Fall, daß mehrere Zwischenböden vorhanden sind, sind sämtliche Zwischenböden durch Ketten miteinander und mit der Deckplatte verbunden. Aus diesem Grunde muß die Bedienungsperson des fahrbaren Behälters beim Anheben und Absenken der Deckplatte jeweils ein beträchtliches Gewicht bewältigen, da in den Zwischenböden Werkzeuge oder Werkstücke aufbewahrt werden. Erfahrungen aus der Praxis haben ergeben, daß das Gesamtgewicht in der Größenordnung von 30 kg liegt. Da ein derartiges Gewicht bis etwa in Tischhöhe angehoben bzw. aus Tischhöhe abgesenkt werden muß, erfordert das Öffnen und Schließen der bekannten fahrbaren Behälter beachtliche körperliche Leistungen, die wegen der gebückten und nach vorn gebeugten Haltung der Bedienungsperson insbesondere deren Wirbelsäule belasten.

Der Erfindung liegt die Aufgabe zugrunde, einen fahrbaren Behälter der als bekannt vorausgesetzten Art derart weiterzubilden, daß seine Handhabung erleichtert und insbesondere die körperliche Belastung der Bedienungsperson herabgesetzt werden können.

Die Lösung dieser Aufgabenstellung durch die Erfindung ist dadurch gekennzeichnet, daß der weitere Zwischenboden zwischen der Deckplatte und dem mit der Deckplatte über biegsame Zugelemente verbundenen Zwischenboden angeordnet, unabhängig von diesem auf den Führungssäulen verschiebbar geführt und durch eigene Verriegelungsvorrichtungen in einer Zwischenstellung an den Führungssäulen festlegbar ist.

Mit dem erfindungsgemäßen Vorschlag wird der Vorteil erreicht, daß zuerst der nahezu gewichtslose Deckel mit dem zusätzlichen Zwischenboden angehoben werden kann, bis dessen Verriegelungsvorrichtungen in den Führungssäulen einrasten. Danach wird der Deckel in seine obersten Stellung angehoben, wobei über die biegsamen Zugelemente nunmehr auch der unterste Zwischenboden mit seinem Gewicht mitgenommen wird. Auf diese Weise ist es möglich, das anzuhebende Gewicht zu halbieren, weil zuerst das Gewicht des oberen Zwischenbodens und des Deckels und danach ausschließlich das Gewicht des untersten Zwischenbodens bewältigt werden muß.

Die Ausführungsform nach den Fig. 1 bis 3 der CH-A-322 378 zeigt zwar einen fahrbaren Behälter, bei dem sowohl der Deckel als auch sämtliche Zwischenböden mit eigenen Verriegelungsvorrichtungen ausgestattet sind. Eine Verbindung des Deckels mit einem, insbesondere dem übernächsten Zwischenboden ist jedoch nicht vorgesehen, so daß bei dieser Ausführungsform beginnend mit dem Deckel alle an den Führungssäulen geführten Teile einzeln angehoben werden müssen, wobei insbesondere der in seine angehobene Stellung überführte Deckel das anschließende Anheben der Zwischenböden behindert und erschwert.

In der Zeichnung ist ein Ausführungsbeispiel des fahrbaren Behälters gemäß der Erfindung mit verschiedenen Stellungen der Deckplatte und der Zwischenböden dargestellt, und zwar zeigt

Fig. 1 eine perspektivische Darstellung des farbaren Behälters in vollständig geschlossenem Zustand,

Fig. 2 einen schematischen Längsschnitt durch den fahrbaren Behälter nach Fig. 1,

Fig. 3 eine perspektivische Ansicht des fahrbaren Behälters nach Fig. 1 mit in die oberste Stellung angehobener Deckplatte, an der über Ketten ein unterer Zwischenboden aufgehängt ist, der sich in einer vom Behälterunterteil abgehobenen Lage befindet und der einen weiteren Zwischenboden trägt,

Fig. 4 einen schematischen Längsschnitt durch den fahrbaren Behälter nach Fig. 3,

Fig. 5 eine perspektivische Darstellung des durch Anheben des oberen Zwischenbodens in eine Zwischenstellung vollständig geöffneten fahrbaren Behälters nach den Fig. 1 und 3,

Fig. 6 einen schematischen Längsschnitt durch den geöffneten Behälter nach Fig. 5,

Fig. 7 eine perspektivische Darstellung des fahrbaren Behälters nach den Fig. 1, 3 und 5 mit in seine geöffnete Stellung angehobenem oberen Zwischenboden und auf diesem Zwischenboden aufliegender Deckplatte und

Fig. 8 einen schematischen Längsschnitt durch den fahrbaren Behälter nach Fig. 7.

Der fahrbare Behälter besitzt ein wannenförmiges, oben offenes Behälterunterteil 1, an dem vier Räder 2 angeordnet sind. In der Längsmitte des Behälterunterteils 1 sind zwei Führungssäulen 3 an dessen Boden befestigt, die sich parallel zueinander sowie senkrecht nach oben erstrecken. Diese Führungssäulen 3 können lösbar oder unlösbar mit dem Behälterunterteil 1 verbunden sein und jeden beliebigen Querschnitt haben, der zur Ausführung der Führungsaufgaben geeignet ist.

An diesen Führungssäulen 3 ist eine Deckplatte 4 in der Höhe verschiebbar gelagert, die in ihrer obersten Stellung mittels einer Verriegelungsvorrichtung festlegbar ist. In den schematischen Längsschnitten sind als Verriegelungsvorrichtung federbelastete Bolzen 5 dargestellt, die an der Deckplatte 4 gelagert sind und in obere Löcher 3a der Führungssäulen 3 eingreifen, wenn sich die Deckplatte 4 in der obersten Stellung befindet.

Mit der Deckplatte 4 ist ein Zwischenboden 6 über biegsame Zugelemente verbunden, die beim Ausführungsbeispiel durch zwei Ketten 7 gebildet sind. Die Länge dieser Ketten 7 ist derart bemessen, daß sich der Zwischenboden 6 in einem vorgegebenen Abstand oberhalb des Behälterunterteils 1 befindet, wenn die Deckplatte 4 in der obersten Stellung an den Führungssäulen 3 verriegelt ist.

Zwischen der Deckplatte 4 und dem Zwischenboden 6 ist auf den Führungssäulen 3 ein weiterer Zwischenboden 8 verschiebbar gelagert, der eine Verriegelungsvorrichtung in der Form von zwei Verriegelungsbolzen 9 besitzt. Mittels dieser Verriegelungsbolzen 9 kann der Zwischenboden 8 in einer Zwischenstellung an den Führungssäulen 3 festgelegt werden, die sich etwa in der Mitte zwischen der obersten Stellung der Deckplatte 4 und dem an dieser Deckplatte 4 hängenden Zwischenboden 6 befindet. An dieser Stelle ist in jeder Führungssäule 3 ein mittleres Loch 3b ausgebildet. Der Durchmesser der Verriegelungsbolzen 9 und der mittleren Löcher 3b ist kleiner als der Durchmesser der oberen Löcher 3a sowie der Bolzen 5, so daß die Bolzen 5 nicht in die für die Verriegelungsbolzen 9 bestimmten mittleren Löcher 3b der Führungssäulen 3 einrasten können.

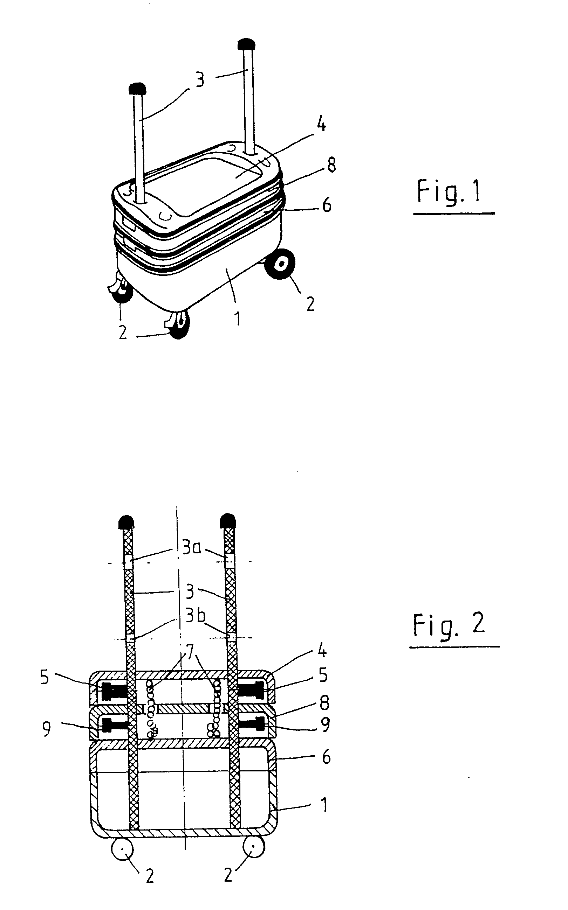

Die Fig. 1 und 2 zeigen den fahrbaren Behälter in seinem geschlossenen Zustand. Die beiden Zwischenböden 6 und 8 und die Deckplatte 4 liegen aufeinander bzw. auf dem Behälterunterteil, so daß durch ein Verschließen dieser Teile in der in den Fig. 1 und 2 gezeigten Stellung das Stauvolumen des Behälters vor einem Zugriff geschützt ist.

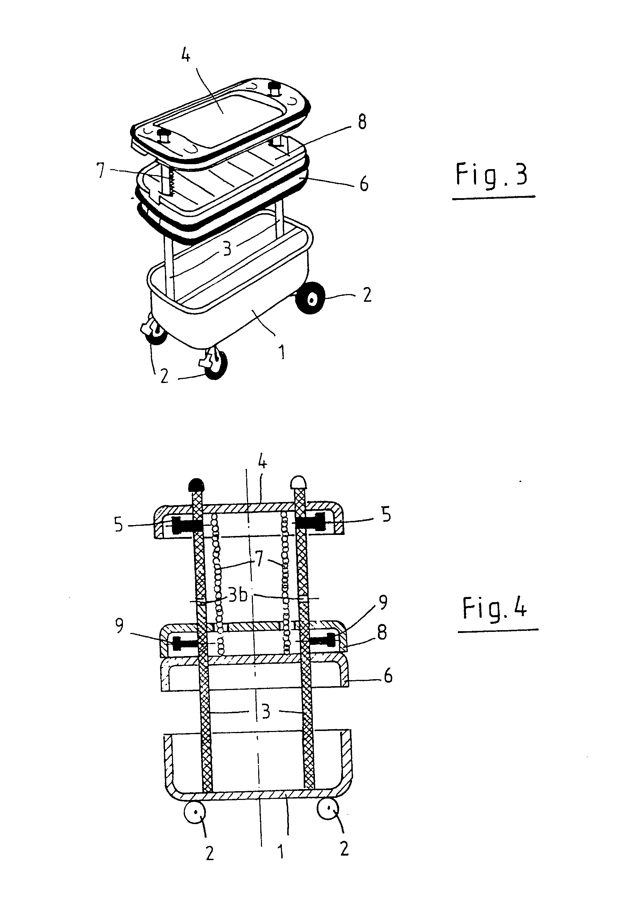

Wenn der fahrbare Behälter geöffnet werden soll, wird gemäß den Fig. 3 und 4 die an den Führungssäulen 3 verschiebbar gelagerte Deckplatte 4 angehoben bis die Bolzen 5 in die oberen Löcher 3a der Führungssäulen 3 einrasten. Bei diesem Anheben der Deckplatte 4 wird über die Ketten 7 der Zwischenboden 6 sowie der auf diesem Zwischenboden 6 liegende Zwischenboden 8 mitgenommen. Es ergibt sich die in den Fig. 3 und 4 gezeichnete Situation, in der der Behälterunterteil duch Anheben des Zwischenbodens 6 zugänglich ist. Auch die im Zwischenboden 8 befindlichen Gegenstände können entnommen werden, wogegen der Stauraum des Zwischenbodens 6 durch den aufliegenden Zwischenboden 8 nicht zugänglich ist. Die Zwischenböden 6 und 8 können beispielsweise durch ein Schloß miteinander verriegelt sein.

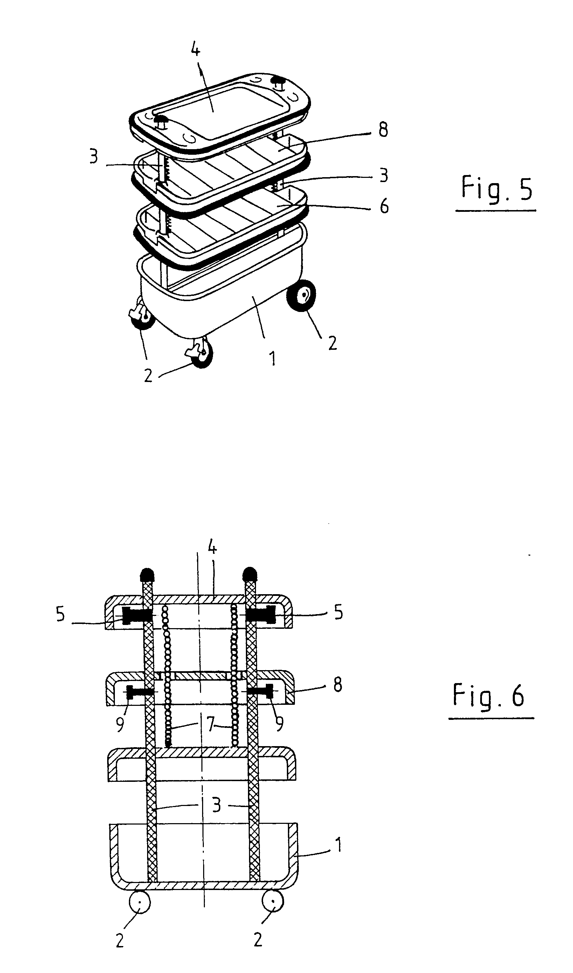

Um auch Zugang zu den im Zwischenboden 6 abgelegten Dingen zu erhalten, ist es gemäß den Fig. 5 und 6 erforderlich, den Zwischenboden 8, der nicht mit der Deckplatte 4 verbunden ist und durch den die Ketten 7 frei hindurchtreten, in seine Zwischenstellung anzuheben. In dieser Zwischenstellung rasten die Verriegelungsbolzen 9 in die mittleren Löcher 3b der Führungssäulen 3 ein. Nunmehr sind sämtliche Teile des fahrbaren Behälters zugänglich.

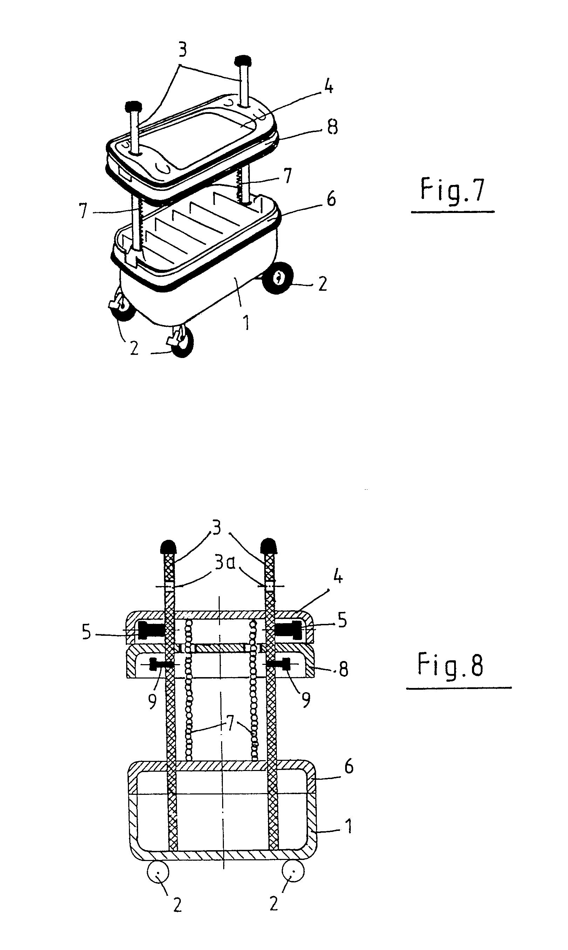

Falls das Gewicht der im Zwischenboden 8 abgelegten Dinge zu groß ist, um diesen Zwischenboden 8 zusammen mit dem Gewicht des Zwischenbodens 6 anzuheben, wird gemäß den Fig. 7 und 8 zuerst der Zwischenboden 8 in seine Zwischenstellung angehoben, in der die Verriegelungsbolzen 9 in die mittleren Löcher 3b der Führungssäulen 3 einrasten. Bei diesem Anheben des Zwischenbodens 8 in seine Zwischenstellung wird zwar das Gewicht der Deckplatte 4 und der Ketten 7 mitgehoben; diese Teile haben aber ein geringes Eigengewicht. Wie insbesondere Fig. 8 erkennen läßt, verbleibt der über die Ketten 7 an der Deckplatte 4 hängende Zwischenboden 6 in seiner auf dem Behälterunterteil 1 aufliegenden Stellung, wenn die auf dem Zwischenboden 8 aufliegende Deckplatte 4 in der voranstehend beschriebenen Weise angehoben wird. Der Zwischenboden 6 und das in ihm liegende Gewicht wird erst anschließend bewegt, wenn nach Verriegelung des Zwischenbodens 8 an den Führungssäulen 3 die Deckplatte 4 in ihre oberste Stellung angehoben wird, die in den Fig. 5 und 6 dargestellt ist und in der die Bolzen 5 in die oberen Löcher 3a der Führungssäule 3 einrasten.

Auf diese Weise ist es möglich, das Gewicht des Zwischenbodens 6 mit dem in ihm befindlichen Material erst nach dem Anheben des Zwischenbodens 8 und unabhängig von diesem zu heben, so daß bei schweren Werkstücken oder Werkzeugen eine Aufteilung des Anhebvorganges erfolgen kann. Auch das bei hohen Gewichten unangenehme und beschwerliche Absenken der Zwischenböden 6 und 8 kann auf die voranstehend beschriebene Weise, jedoch in umgekehrter Reihenfolge stattfinden.

Wie die Fig. 7 und 8 erkennen lassen, ist es außerdem möglich, die Deckplatte 4 mit dem Zwischenboden 6 in der mittleren Stellung zu lassen. In dieser Stellung schließt der Zwischenboden 6 den Zugang zum Behälterunterteil 1 und die Deckplatte 4 den Zugang zum Zwischenboden 8 ab, so daß lediglich der Inhalt des Zwischenbodens 6 zugänglich ist, wenn die Teile 4 und 8 bzw. 6 und 1 beispielsweise durch ein Schloß miteinander verriegelt werden. Auch in der mittleren Stellung nach Fig. 7 und 8 kann die Deckplatte 4 als Ablegefläche oder Arbeitsfläche benutzt werden, da die Verriegelung des Zwischenbodens 8 mit den Führungssäulen 3 ausreicht, um die notwendige Stabilität der Deckplatte 4 zu erzielen.

## Patentanspruch

Fahrbarer Behälter, insbesondere zur Aufbewahrung von Werkzeugen und Werkstücken, vorzugsweise in Kraftfahrzeugwerkstätten, mit einem mit Rädern (2) versehenen Behälterunterteil (1), an dem mindestens zwei Führungssäulen (3) zur Lagerung einer Deckplatte (4) angeordnet sind, die in ihrer obersten Stellung mittels einer Verriegelungsvorrichtung (5) festlegbar ist und die über biegsame Zugelemente, vorzugsweise Ketten (7) oder Seile, mit einem Zwischenboden (6) derart verbunden ist, daß dieser bei in der obersten Stellung festgelegter Deckplatte (4) von dem Behälterunterteil (1) abgehoben ist, sowie mit einem weiteren Zwischenboden (8), dadurch gekennzeichnet, daß der weitere Zwischenboden (8) zwischen der Deckplatte (4) und dem mit der Deckplatte (4) über biegsame Zugelemente (7) verbundenen Zwischenboden (6) angeordnet, unabhängig von diesem auf den Führungssäulen (3) verschiebbar geführt und durch eigene Verriegelungsvorrichtungen (9) in einer Zwischenstellung an den Führungssäulen (3) festlegbar ist.

## Claims

Transportable container, in particular for the accommodation of tools and workpieces, preferably in vehicle workshops, with a container base (1) provided with wheels (2), on which at least two guide pillars (3) are mounted for support of a cover plate (4), which in its uppermost position can be secured by means of a locking device (5) and which is connected with an intermediate floor (6) through flexible tension elements, preferably chains (7) or cables, so that this is raised from the container base (1) with the cover plate (4) fixed in the uppermost position, as well as with a further intermediate floor (8), characterised in that, the further intermediate floor is connected with the cover plate (4) through flexible tension elements (7), is disposed between the cover plate (4) and the intermediate floor (6), and is slidably guided on the guide pillars (3) independently of the latter and can be fixed by an individual locking device (9) in an intermediate position on the guide pillars (3).

## Revendication

Récipient mobile, destiné notamment au stockage d'outils et de pièces fabriquées, de préférence dans des ateliers de réparation d'automobiles, et comportant une partie inférieure (1) équipée de roues (2) sur laquelle sont montées au moins deux colonnes de guidage (3) permettant le montage d'une plaque de recouvrement (4), qui peut être assujettie dans sa position haute extrême au moyen d'un mécanisme de verrouillage (5), et qui peut être reliée à au moins un fond intermédiaire (6), par des organs souples de traction, de préférence des chaînes (7) ou des câbles, de telle sorte que ledit fond intermédiaire soit soulevé à l'écart de ladite partie inférieure (1) du récipient lorsque ladite plaque de recouvrement (4) est assujettie dans sa position haute extrême, ainsi qu'un autre fond intermédiaire (8), récipient caractérisé par le fait que l'autre fond intermédiaire (8) est intercalé entre ladite plaque de recouvrement (4) et le fond intermédiaire (6) relié à cette plaque de recouvrement (4) à l'aide d'organs souples de traction (7), est guidé à coulissement sur les colonnes de guidage (3) indépendamment dudit fond intermédiaire et peut être bloqué, à l'aide de mécanismes de verrouillage propres (9), dans une position intermédiaire sur lesdites colonnes de guidage (3).

Fig.1

Fig. 2

Fig.3

Fig.4

Fig. 5

Fig. 6

Fig.7

Fig.8